# FASCICULE DE BREVET EUROPEEN

(11) **EP 2 507 749 B1**
(45) Date de publication et mention de la délivrance du brevet: **02.10.2013**
(21) Numéro de dépôt: 10805459.4
(22) Date de dépôt: 01.12.2010
(51) Int. Cl.: G06K 19/077, G06K 17/00

(54) **MACHINE DE PERSONNALISATION ÉLECTRIQUE ET GRAPHIQUE D'OBJETS ÉLECTRONIQUES PORTATIFS**
MASCHINE FÜR DIE ELEKTRISCHE UND GRAFISCHE PERSONALISIERUNG VON TRAGBAREN ELEKTRONISCHEN OBJEKTEN
MACHINE FOR THE ELECTRICAL AND GRAPHIC CUSTOMISATION OF PORTABLE ELECTRONIC OBJECTS

(30) Priorité: 03.12.2009 FR 0905827
(43) Date de publication de la demande: 10.10.2012
(73) Titulaire: Ormerod, Simon, 13600 La Ciotat (FR)
(72) Inventeur: MONGIN, Hervé, F-45450 Donnery (FR)
(74) Mandataire: Debay, Yves
(86) Numéro de dépôt international: PCT/FR2010/052590
(87) Numéro de publication internationale: WO 2011/067537

(56) Documents cités:
- WO-A1-2006/033743
- US-A1- 2005 067 497

## Description

La présente invention concerne une machine de personnalisation électrique et graphique d'objets électroniques portatifs.

La présente invention concerne un système de personnalisation électrique d'objets électroniques communiquant. Il peut s'agir de cartes à puce, de clés USB ou d'objets de la sorte nécessitant la programmation d'un composant embarqué sur cet objet.

La personnalisation électrique consiste à programmer le composant embarqué dans l'objet, soit en réalisant un contact électrique entre l'objet à programmer et le système de programmation, soit en utilisant une communication sans contact.

Par objet portatif on entend tout objet incluant un composant électronique pourvu d'au moins un microprocesseur et d'au moins une mémoire programmable non volatile dont certaines zones sont protégées en accès (écriture ou lecture) de l'extérieur. Ce composant étant inséré dans un boîtier ou dans un support qui lui-même peut être personnalisé graphiquement par des éléments sécuritaires tels que, par exemple, une photo d'identité du porteur de l'objet, des données représentant le porteur de l'objet, un code à barres, un code matriciel, un embossage de données alphanumériques, une gravure d'empreintes digitales, une publicité, etc... Cette personnalisation graphique doit en général être en corrélation avec les données binaires de personnalisation électronique inscrites dans la mémoire du composant situé dans l'objet portatif.

Les machines de personnalisation connues dans l'art antérieur étaient constituées d'une pluralité de postes, le premier poste permettant la personnalisation électrique. Les objets portables sortant de cette personnalisation étaient transportés sur un autre poste permettant l'impression d'une photo ou d'une gravure laser, un troisième poste permettant l'embossage etc... Ces machines comprenaient en général autant de postes que d'éléments de personnalisation électroniques ou graphiques à reporter sur/ou dans l'objet. Les objets portatifs étaient transportés par des moyens de transport successivement d'un poste à l'autre pour ensuite être déchargés en fin de machine lorsque toutes les opérations de personnalisation étaient terminées. Ces opérations de transfert et de chargement/déchargement à chaque poste étaient source de chutes éventuelles d'objets, de mauvais placements de ces objets et par conséquent de perturbation du fonctionnement de l'ensemble ainsi constitué. Ces différentes manipulations pouvaient ainsi conduire à ce qu'un lot d'objets personnalisés ne soit pas dans l'ordre prévu initialement par le système informatique puisque certains objets ayant pu chuter ou ayant été rejetés par suite de la détection d'un défaut, l'ordre des objets ne suit pas parfaitement l'ordre des fichiers de données de personnalisation du système informatique qui gère l'ensemble des postes constituant la machine. Une telle machine de personnalisation est décrite dans le document US 2005/067497 A1

Un but de la présente machine est de palier un ou plusieurs des inconvénients présentés ci-dessus.

Ce premier but est atteint par la machine de personnalisation électrique et graphique d'objets électroniques portatifs comportant un poste de chargement, une pluralité de postes de traitement, incluant au moins un poste de marquage au laser ou marquage au jet d'encre et/ou un poste d'inspection et/ou un poste de dépôt d'étiquettes, un poste de rejet et un poste de déchargement des objets personnalisés, caractérisé en ce qu' un dispositif de transfert comporte au moins un composant mobile, selon un cheminement en boucle fermée, chaque composant mobile étant entrainé en déplacement, selon le cheminement et solidaire d'une tête d'encodage reliée à une carte de programmation entrainée en mouvement par le composant mobile, le cheminement amenant successivement la tête d'encodage d'un poste de chargement à au moins un poste de traitement en exécutant simultanément la personnalisation électronique du composant, puis soit à la sortie soit à un poste de rejet.

Selon une particularité, la machine comporte une unité de traitement assurant la commande des différents postes de la machine et la commande des moyens d'entrainement du dispositif de transfert.

Selon une autre particularité, la carte de programmation assure la personnalisation électronique du composant de l'objet portable même pendant le traitement de l'objet portable par un poste de traitement.

Selon une autre particularité, le poste de traitement est un poste de contrôle et un contrôle considéré comme défectueux effectué par le poste déclenche le déroutement du programme de fonctionnement de la machine mis en oeuvre par l'unité de traitement vers un programme de traitement d'incident exécuté par l'unité de traitement, ce programme assurant un cycle spécial de réfection d'un objet dont la défectuosité a été détectée, l'interruption de la programmation électronique du composant défectueux, la commande du dispositif de transfert pour amener l'objet portable de la position dans laquelle une erreur est détectée à une position de rejet des rebuts tout en poursuivant la programmation des autres composants, puis l'amenée de la tête d'encodage rendue libre au poste de chargement pour charger un objet électronique portable à programmer, et concomitamment, le rechargement de la carte de programmation associée à la tête d'encodage nouvellement chargée avec les données prévues initialement pour l'objet portable rejeté, ainsi que le rechargement des données des postes situés entre la position de détection de défaut et le poste d'entrée puis la reprise des opérations à chaque poste avec les données correspondantes à l'objet remplacé jusqu'à ce que la position où le défaut a été détecté soit atteinte.

Selon une autre particularité, les moyens de contact de la tête d'encodage sont disposés de façon à laisser libre d'accès de toutes les autres zones de l'objet portable à l'exception des zones de contact dans le cas d'un objet portable à contact, pour permettre les opérations graphiques ou de personnalisation externe sur les objets pendant la personnalisation électrique.

Selon une autre particularité, la mémoire du système informatique comprend pour chaque objet
- un Identifiant unique ;
- des Informations relatives aux données initiales (par exemple, nom du fichier de donnée, position de cet objet dans le fichier de données...) ;
- des données variables servant à la personnalisation (par exemple, les nom-prénom, date d'expiration, photo, code barre....);
- le statut de l'objet (objet valide, objet défectueux) et type d'erreur (par exemple, erreur lors de la programmation du chip, du laser, suite à un défaut mécanique).

Selon une autre particularité, le logiciel de gestion de la machine gère le cycle normal de la machine et un cycle spécial de réfection d'un objet

Selon une autre particularité, le logiciel associe en mémoire d'état courant du système informatique (8), la liste des objets à leurs positions physiques dans la machine

Selon une autre particularité, lors d'un cycle spécial de réfection d'un objet, l'état de la machine, les identifiants et les états des objets sont sauvegardés dans une mémoire spécifique de défaut afin de repositionner la machine dans le même état qu'avant le début du cycle de réfection, la procédure du logiciel mise en oeuvre lors du cycle de réfection comprend :
- la sauvegarde de l'état machine dans une mémoire défaut dédiée ;
- une rotation du transfert pour amener l'objet détecté comme défectueux en face du poste de rejet, les opérations de personnalisation électrique des autres objets continuant et les opérations prévues sur les autres postes de la machine pour ces autres objets étant arrêtées ;

- la commande de l'Ejection de l'objet défectueux ;
- la commande du déplacement du transfert (4) pour amener le poste libre devant le poste de chargement et chargement d'un nouvel objet;
- la reprise d'un cycle complet afin de faire refaire toutes les opérations de la tête d'encodage associée à l'objet ayant remplacé l'objet défectueux ;
- la sauvegarde à chaque étape de l'état de la machine dans la mémoire d'état ;
- l'arrêt du cycle spécial de réfection une fois que l'état courant de la machine correspond à l'état machine sauvegardé en mémoire dédiée avant le début du cycle de réfection, par comparaison des informations enregistrées dans la mémoire dédiée avec la mémoire de travail mémorisant les états de la machine à chaque étape ;
- la poursuite du processus par un cycle normal en transférant les objets aux postes suivants et en reprenant les opérations là où elles avaient été interrompues en chargeant dans les cartes de commandes de chaque postes les informations associées à l'objet présent dans le poste selon les informations de la mémoire d'état de la machine.

D'autres particularités et avantages ressortiront plus clairement à la lecture de la description faite en référence aux dessins annexés représentant un mode illustratif de réalisation de l'invention dans lesquels :

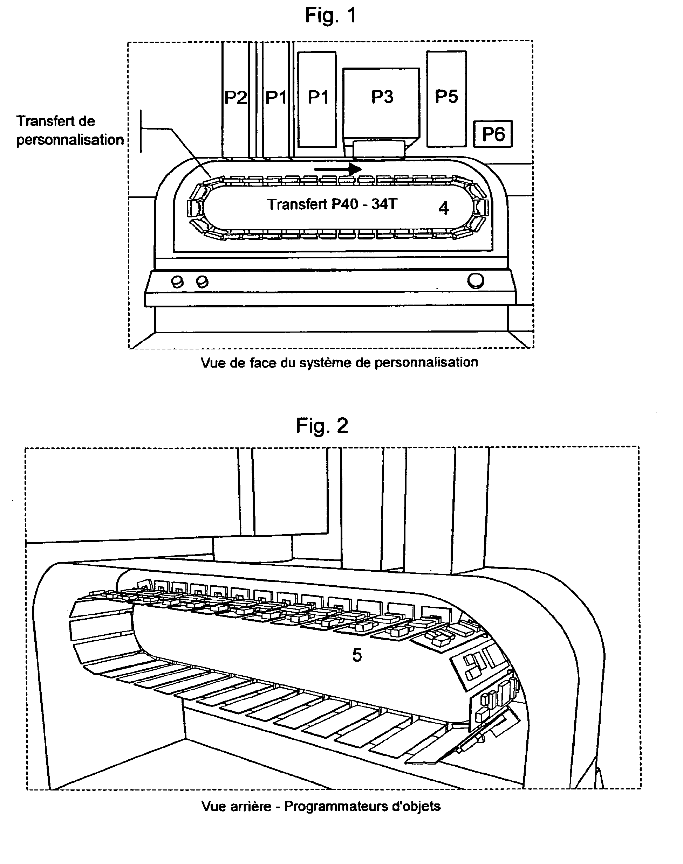

- la figure 1 représente une vue de face du système de personnalisation selon l'invention ;
- la figure 2 représente une vue arrière du système de personnalisation selon l'invention ;
- la figure 3 représente les moyens de programmation électrique des objets portables et notamment un exemple de chaînage réseau série des cartes de programmation liées aux têtes d'encodage. ;
- la figure 4 représente un autre exemple de câblage du réseau en structure arborescente des cartes de programmation pour chacune des têtes d'encodage ;
- la figure 5 représente le tableau représentatif du nombre de relais à associer selon le nombre de carte de programmation ;
- la figure 6 représente une vue en perspective d'un exemple de réalisation d'une tête d'encodage dans le cas d'objet portable à contact ;
- la figure 7 représente schématiquement une vue de dessus et une vue de dessous des zones de l'objet portable restant disponibles pour d'autres opérations, pendant la programmation électrique du circuit électronique de l'objet portable.
- La figure 8 représente de façon schématique une exemple de configuration d'une machine type contenant 8 têtes d'encodage et 4 postes de traitement parallèles

### Description de l'invention :

La présente invention décrit une architecture mécanique de machine de personnalisation électrique et graphique d'objets électroniques portables. Cette machine présente la particularité de fusionner la fonction de programmation électrique des objets pendant le transport et l'exécution, à chaque poste de la machine, d'autres opérations sur les objets, telles que par exemple, des fonctions de contrôle, de personnalisation graphique, etc..., en même temps que la personnalisation électrique du circuit électronique de l'objet se poursuit.

Le transfert (4) de personnalisation électrique est le coeur de la machine.

Sa première fonction consiste à transporter les objets électroniques de poste en poste afin que chaque objet suive le processus de fabrication voulu (par exemple) un poste (P3) marquage laser ou jet d'encre, un poste (P4) d'inspection par caméra, un poste (P5) de dépôt d'une étiquette, un poste (P6) de rejet des rebus, un poste (P2) de déchargement, etc...). Cette fonction de transfert se retrouve dans tous les ensembles de machines de personnalisation, de gravure laser, de pose d'étiquette, etc... existantes.

Le dispositif de transfert (4) comporte une pluralité de composants mobiles, agencés pour se déplacer selon un cheminement en boucle fermée, chaque composant mobile est entrainé en déplacement selon le cheminement et est solidaire d'une tête d'encodage (6).

Le second rôle du transfert de personnalisation (4) de l'invention consiste à l'aide de la tête d'encodage (6) reliée au programmateur (5) à programmer les objets électroniques (OP) pendant leur déplacement. Ainsi, dès qu'un objet est extrait du poste de chargement en entrée (P1) puis inséré dans le transfert (4) à une position i, la liaison avec la carte de programmation (5i) assurant la fonction de programmateur du circuit électronique de l'objet (OP) est assurée et la programmation du composant peut commencer immédiatement. Durant son passage aux différents postes de traitement (P3, P4, P5), l'objet (OP) continue d'être programmé en parallèle jusqu'à son extraction au poste de déchargement en sortie (P2) ou son éjection au bac de rejet du poste (P6).

Afin d'assurer la programmation continue des objets pendant leur déplacement, chaque tête d'encodage électrique (6) est couplée à un programmateur (5). Les programmateurs (5) sont solidaires de chaque tête d'encodage en mouvement et se déplacent en même temps que celles-ci.

La connexion électrique entres les programmateurs (5) en mouvement et un système de gestion et de distribution des données (8) (un PC par exemple), est assurée par un collecteur tournant ou joint tournant (7).

Tout autre dispositif permettant le transfert des données et de l'alimentation vers les programmateurs (5) peut être utilisé, tel que par exemple une liaison sans fil ou une liaison filaire permettant un déplacement limité et de direction alternée.

### Avantages du système :

- Une telle architecture permet de fusionner deux fonctions en une (la fonction transport et la fonction programmation électrique). Ceci permet une diminution des encombrements et des coûts. Les systèmes concurrents disposent d'un système de transfert pour véhiculer les objets de postes en postes. L'un des postes d'une machine consiste en un système d'accumulation d'objets en vue de leur programmation. Ce poste additionnel n'existe donc pas dans la présente invention car celui-ci est géré par le transport.
- Le temps de programmation des objets pouvant durer plusieurs minutes, l'architecture de l'invention permet de donner un maximum de temps à la programmation (depuis son entrée dans la machine jusqu'à sa sortie). Les objets bénéficient en plus du temps de retour en partie basse contrairement aux machines existantes faisant entrer les objets sur un côté de la machine et les faisant sortir de l'autre côté.
- Pour certaines applications de personnalisation d'objets ou de cartes à puce, il est demandé, qu'en sortie de machine, l'ordre des objets soit respecté et suive parfaitement l'ordre des fichiers de données.
- Lors de la production des objets, plusieurs types de défauts peuvent apparaître, nécessitant le rejet automatique de l'objet défectueux. Il peut s'agir d'un défaut électrique parvenant lors de la programmation de l'objet ou d'un défaut graphique, survenant lors du marquage sur l'objet. Des défauts de contrôle visuels peuvent exister ainsi que des défauts mécaniques liés à la machine en question.
- Pour les machines connues de l'art antérieur, de tels objets défectueux et rejetés automatiquement génèrent un trou dans la séquence car le système n'est pas capable physiquement de refaire l'objet et de le réinsérer en sortie de machine à la place qui convient.
- Suite à cela, il est nécessaire de reproduire le ou les objets défectueux de la production en cours. Un opérateur aura alors la charge d'intercaler les objets produits dans le lot global. Une telle opération est coûteuse en temps, en immobilisation de machine pour refaire parfois un seul objet, et est source d'erreur lors de l'insertion manuelle dans la séquence.
- Si un objet est vu comme défectueux par la machine (erreur de programmation), il est possible de faire déplacer le transfert de programmation afin d'amener la tête d'encodage (6i) de l'objet en question en face du poste (P6) de rejet des rebus. L'objet est alors éjecté. Le transfert se déplace alors pour présenter la tête d'encodage libre devant le poste de chargement (P1) afin d'y insérer un nouvel objet. La programmation reprend sur cet objet avec les données de l'objet précédemment éjecté. Le transfert continue à nouveau son déplacement pour reprendre sa position initiale et le cycle continue. La continuité de séquence des objets en sortie est alors respectée et il n'y a pas de trou dans la séquence de programmation.
- De la même façon, si un objet est jugé défectueux lors de son marquage graphique (soit parce que le poste de marquage (P3) signale une erreur, soit parce qu'un système d'inspection optique (P4) déclare le marquage incorrect), la séquence de remplacement est alors effectuée afin de refaire cet objet automatiquement. La séquence de sortie est encore respectée. Cette fonctionnalité n'est pas possible sur les machines actuelles du marché.
- Une fois l'objet inséré dans le transfert de personnalisation, l'objet n'est plus manipulé (sauf une mise en référence possible pour certains postes comme le marquage laser). Cette particularité permet d'utiliser cette machine pour des objets de petites tailles dont la manipulation est difficile. Ceci permet aussi de faire varier les formes externes de l'objet sans pour autant avoir à reconfigurer mécaniquement toute la machine. Par exemple, si la connectique entre le transfert (4) et l'objet est faite via un connecteur USB standard, la machine pourra facilement accepter différentes formes de clés USB quelque soient leurs formes extérieures et sans adaptation lourde de la machine.

Afin de garder l'ordre en sortie de machine, il est alors important d'avoir le moyen de refaire dynamiquement l'objet défectueux quelque soit son type de défaut et de le réinsérer à la place qui convient.

Le transfert de personnalisation proposé réalise nativement la réfection de tous les objets détectés mauvais, quelque soit leur endroit au sein de la machine et les repositionne à leur place.

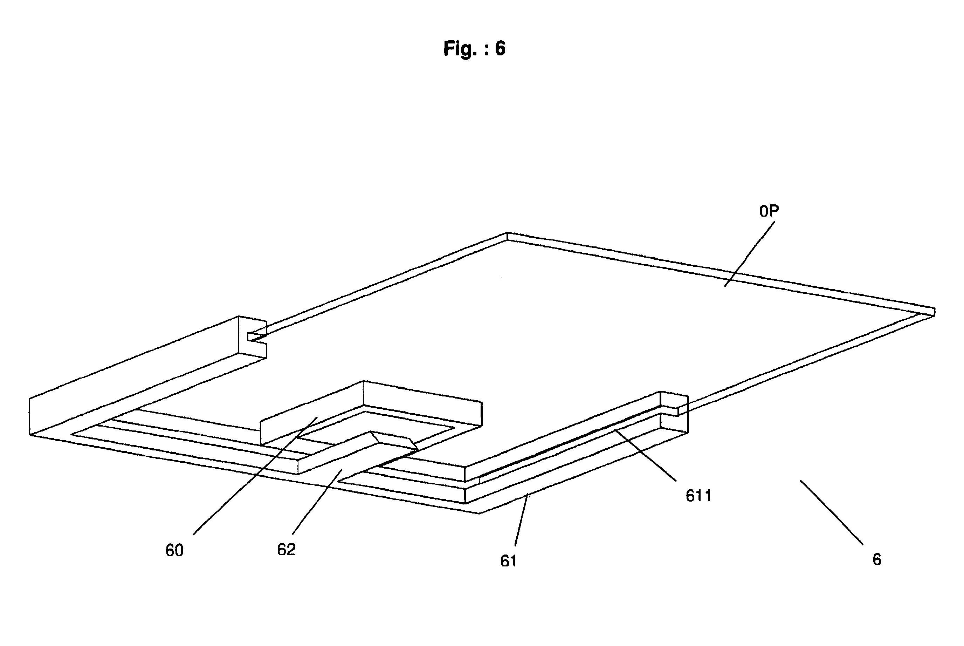

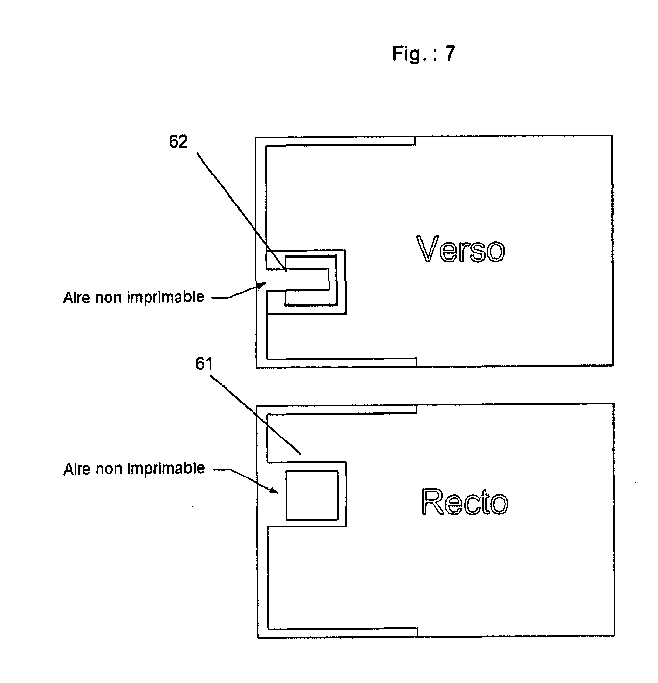

La logique de réfection automatique est décrite ci-dessous :
- L'objet contenu dans la tête de personnalisation X du transfert tournant est détecté comme étant mauvais (défaut électrique/graphique/autre)
- La machine mémorise la position mécanique actuelle de la tête de personnalisation associée avec l'objet portable défectueux (position A)
- La machine fait tourner le transfert afin de présenter la tête X en face du poste d'éjection (P6) des objets défectueux
- L'objet est éjecté. La tête X est maintenant vide.
- La machine fait tourner le transfert pour positionner la tête X en face du poste (P1) d'entrée des objets vierges (le dépileur)
- Un nouvel objet vierge est alors inséré dans la position vide
- Le logiciel de contrôle réaffecte les anciennes données de l'objet rejeté sur le programmateur (5.x) associé au nouvel objet vierge
- La programmation électrique de l'objet commence avec les anciennes données
- Pendant la programmation électrique, le transfert tourne pour présenter la tête X au premier poste de personnalisation graphique (par exemple sous un laser de marquage). Les informations associées à l'objet sont alors imprimées, pendant que les informations à programmer dans la mémoire électronique de l'objet portable sont écrites. A cet effet comme représenté figure 6 la tête d'encodage comporte une plage (60) de contacts positionnés en vis a vis des contacts de l'objet portable et une languette 62 plaquant l'objet portable (OP) contre la plage de contact (60). Ces deux éléments sont solidaires d'un élément support (61) lié mécaniquement au transfert mobile (4). Chaque élément support (61) en forme de U comporte une gorge (611) dans laquelle un objet portable (OP) est glissé. Comme on peut le constater sur la figure 7 les éléments de liaison entre l'objet portable (OP) et le programmateur (5), occultent un minimum de surface extérieure de l'objet portable pour permettre en parallèle le traitement aux autres postes (gravure laser ou embossage, etc..., pendant que la personnalisation électrique se poursuit.
- Et ainsi de suite afin de refaire passer l'objet vierge à tous les postes de traitement jusqu'à ce que la machine se retrouve en position A (position courante avant la déviation du cycle machine pour gérer la procédure de réfection) et que l'objet se retrouve dans la même position et dans le même état (le défaut en moins) qu'avant.
- A ce stade, l'objet défectueux à été refait, inséré dans la bonne position et le cycle reprend pour tous les objets présents dans le transfert, comme si aucun défaut n'avait été constaté

Afin de gérer la procédure de réfection automatique des cartes ou des objets défectueux pendant leur personnalisation sur la machine, il est nécessaire que le logiciel de gestion du moyen informatique (8) de la machine dispose, à chaque instant, d'informations représentant l'état des objets portables (statut) ainsi que de l'historique des opérations effectuées.

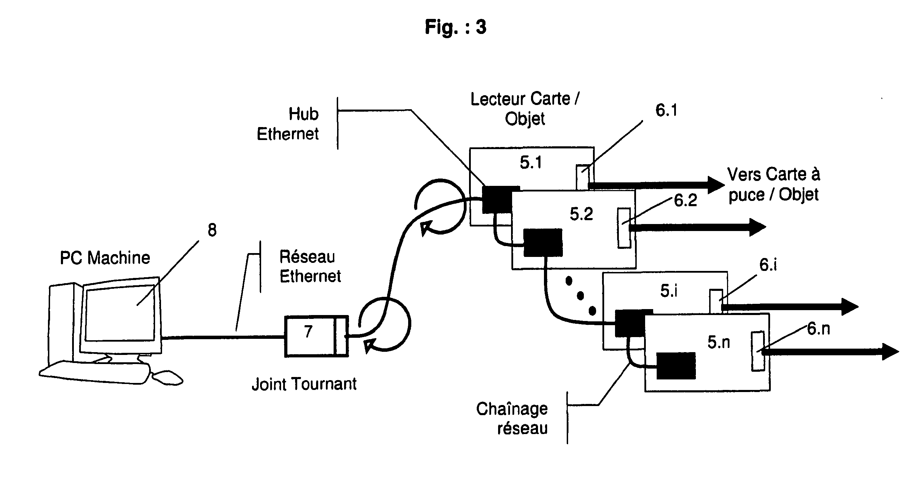

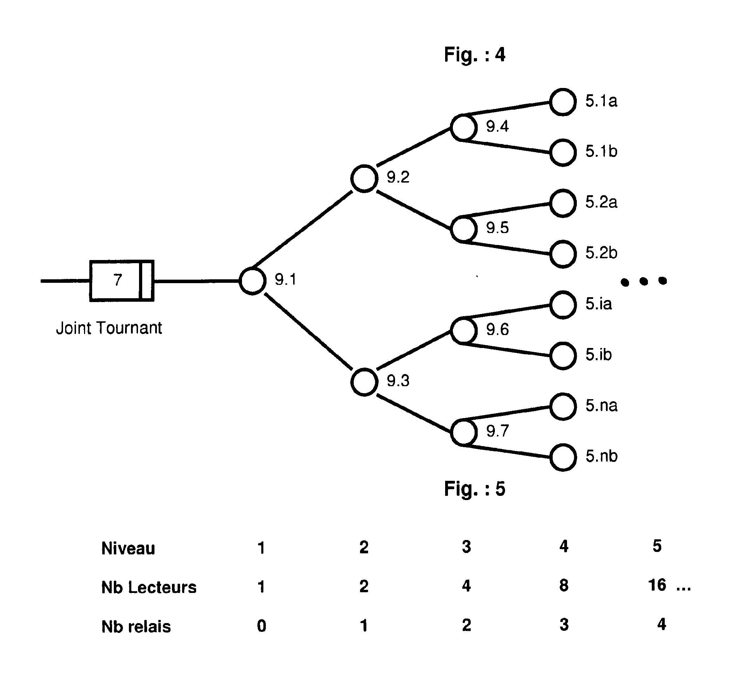

Chaque objet, dès lors qu'il est inséré dans la machine par le poste d'entrée, est lié à un espace mémoire du système informatique de gestion de la machine contenant toutes les informations nécessaire à son suivi :
- Identifiant unique ;
- Informations relatives aux données initiales (par exemple, nom du fichier de donnée, position de cet objet dans le fichier de données...) ;
- Données variables servant à la personnalisation (par exemple, les nom-prénom, date d'expiration, photo, code barre....). Ces données peuvent servir, par exemple, pour la programmation de la puce, pour l'impression au jet d'encre ou au laser, pour la programmation de la piste magnétique, etc... ;
- Statut de l'objet (objet valide, objet défectueux) et type d'erreur (par exemple, erreur lors de la programmation du chip, du laser, suite à un défaut mécanique...)
- Chaque lecteur est embarqué sur le transfert de personnalisation. A chaque tête d'encodage (6i) (ou chaque objet) correspond un lecteur (5i) embarqué physiquement sur la tête de personnalisation (le chariot supportant la tête, la connectique, le lecteur, l'objet et les moyens de maintien...).
- La mise en réseau des lecteurs se fait par le chaînage de relais Ethernet (9.1 à 9.7) représentés figures 4 et 5 afin d'éviter qu'un nombre de fils trop importants traversent le joint tournant (7) (limité en nombre de fils)
- Afin de diminuer la longueur de la chaine de lecteurs (et donc le temps pour interroger le dernier lecteur de la chaine), il est envisageable que chaque lecteur dispose de 2 sorties Ethernet (5.1 a, 5.1 b) afin de relier les 2 lecteurs suivant. La figure 3 représente un chaînage en série des lecteurs. Ce chaînage étant le mieux adapté pour physiquement lier les lecteurs entres eux mais présente le désavantage d'être le plus lent. La figure 4 représente une structure arborescente où chaque lecteur constitue un noeud reliant les 2 lecteurs suivant. Ce principe présente une meilleure efficacité mais une connexion mécaniquement moins avantageuse.

Le logiciel de gestion de la machine possède aussi un fichier décrivant la configuration de la machine. Ainsi on peut retrouver, pour chaque poste physique et fonctionnel de la machine un descriptif décrivant le type de poste et ses options de fonctionnement.

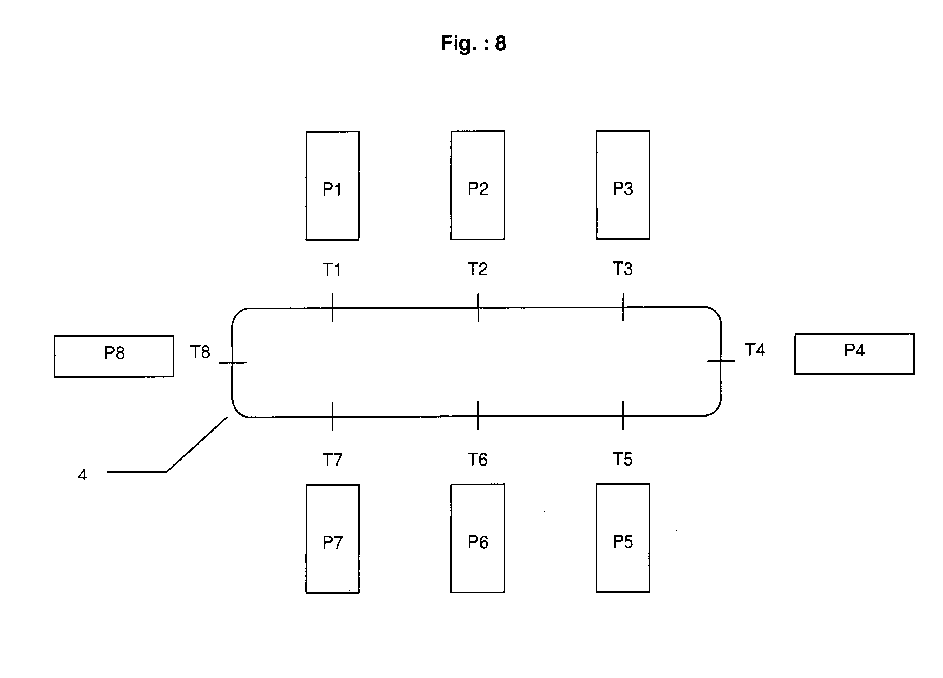

Une machine pourra, par exemple et selon la figure 8, comporter un transfert de personnalisation (4) comportant 8 têtes d'encodage autour duquel sont implantés 4 postes de traitement :
- Poste 1 : Empileur (bac de sortie)
- Poste 2 : Dépileur (bac d'entrée)
- Poste 3 : Impression laser
- Poste 4 : Bac de rejet
- Poste 5 : Libre
- Poste 6 : Libre
- Poste 7 : Libre
- Poste 8 : Libre

Afin de gérer la liste des objets présents dans la machine, le logiciel associe en mémoire d'état courant du système informatique (8), la liste des objets et leurs positions physiques dans le transfert de personnalisation. Ainsi on retrouve en mémoire :
- T1 : Vide (l'objet a été préalablement empilé dans le chargeur de sortie)
- T2 : Objet n°00011
- T3 : Objet n°00010
- T4 : Objet n°00009
- T5 : Objet n°00008
- T6 : Objet n°00007
- T7 : Objet n°00006
- T8 : Objet n°00005

Le logiciel associe ensuite la position des têtes d'encodage Ti par rapport aux postes de traitement. Ainsi on retrouve par exemple en mémoire :
- Poste 1 : T1 : Vide
- Poste 2 : T2 : Objet n°00011
- Poste 3 : T3 : Objet n°00010
- Poste 4 : T4 : Objet n°00009
- Poste 5 : T5 : Objet n°00008
- Poste 6 : T6 : Objet n°00007
- Poste 7 : T7 : Objet n°00006
- Poste 8 : T8 : Objet n°00005

Cet état réel de la machine est sauvegardé et remis à jour en fonction du cycle machine :
- A l'arrêt de la machine, le système informatique sauvegarde les positions et les identifiants des objets
- Au redémarrage de la machine, le système informatique recharge les positions et objets afin de repartir en cycle comme si la machine ne s'était jamais arrêtée
- A chaque avancée du transfert de personnalisation, la mémoire d'état courant est modifiée en faisant avancer la liste des objets d'un pas :
   - Poste 1 : T8 : Vide (l'objet n°00005 a été empilé en sortie)
   - Poste 2 : T1 : Objet n°00012 (nouvel objet entran t)
   - Poste 3 : T2 : Objet n°00011
   - Poste 4 : T3 : Objet n°00010
   - Poste 5 : T4 : Objet n°00009
   - Poste 6 : T5 : Objet n°00008
   - Poste 7 : T6 : Objet n°00007
   - Poste 8 : T7 : Objet n°00006
- Lors d'un cycle spécial de réfection d'un objet, il est nécessaire de sauvegarder l'état de la machine, les identifiants et les états des objets dans une mémoire spécifique de défaut afin de repositionner la machine dans le même état qu'avant le début du cycle de réfection. La procédure peut être vue ainsi :
   ○ L'objet n° 00011 est détecté mauvais en Poste 3 (laser) ;
   ○ Sauvegarde de l'état machine dans une « mémoire » dédiée de défaut ;
      - Poste 1 : T8 : Vide
      - Poste 2 : T1 : Objet n°00012
      - Poste 3 : T2 : Objet n°00011 (défaut)
      - Poste 4 : T3 : Objet n°00010
      - Poste 5 : T4 : Objet n°00009
      - Poste 6 : T5 : Objet n°00008
      - Poste 7 : T6 : Objet n°00007
      - Poste 8 : T7 : Objet n°00006
   ○ Rotation du transfert pour amener l'objet 00011 en face du poste P4 de rejet (dans cet exemple le transfert avance d'un pas), les opérations de personnalisation électrique des autres objets continuent et les opérations prévues sur les autres postes de la machine étant arrêtées ;
   ○ Sauvegarde de l'état réel de la machine représenté ci-après :
      - Poste 1 : T7 : Objet n°00006
      - Poste 2 : T8 : Vide
      - Poste 3 : T1 : Objet n°00012
      - Poste 4 : T2 : Objet n°00011 (défaut)
      - Poste 5 : T3 : Objet n°00010
      - Poste 6 : T4 : Objet n°00009
      - Poste 7 : T5 : Objet n°00008
      - Poste 8 : T6 : Objet n°00007
   ○ Commande de l'Ejection de l'objet ; La tête T2 située en face de P4 est maintenant vide
   ○ Sauvegarde de l'état machine
   ○ Rotation du transfert (4) pour amener le poste libre devant le dépileur P2 et insertion d'un nouvel objet vierge;
      - Poste 1 : T1 : Objet n°00012
      - Poste 2 : T2 : Vide (on insère un nouvel objet vierge qui reprend les données n°00011)
      - Poste 3 : T3 : Objet n°00010
      - Poste 4 : T4 : Objet n°00009
      - Poste 5 : T5 : Objet n°00008
      - Poste 6 : T6 : Objet n°00007
      - Poste 7 : T7 : Objet n°00006
      - Poste 8 : T8 : Vide
   ○ A partir de là, le système informatique de commande de la machine reprend le cycle complet afin de faire refaire toutes les opérations à la tête d'encodage T2 associée à l'objet (00011) ayant remplacé l'objet défectueux. Dans notre exemple, l'objet vierge n°00011 repasse sous le las er P3 pour y inscrire graphiquement les données ;
   ○ A chaque étape, l'état de la machine est sauvegardé ;
   ○ Le cycle spécial de réfection s'arrête une fois que l'état de la machine correspond à l'état machine sauvegardé avant le début du cycle de réfection :
      - Poste 1 : T8 : Vide
      - Poste 2 : T1 : Objet n°00012
      - Poste 3 : T2 : Objet n°00011
      - Poste 4 : T3 : Objet n°00010
      - Poste 5 : T4 : Objet n°00009
      - Poste 6 : T5 : Objet n°00008
      - Poste 7 : T6 : Objet n°00007
      - Poste 8 : T7 : Objet n°00006
   ○ A ce moment, la machine se retrouve dans la même configuration et dans la même position, au détail près que l'objet défectueux est maintenant remplacé par un objet valide et entièrement refait.
   ○ Le processus poursuit ensuite son cycle normalement en transférant les objets aux postes suivants
   ○ et ceci jusqu'à la détection d'un autre défaut sur un objet ou à l'arrêt normal de la machine

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes

## Revendications

1. Machine de personnalisation électrique et graphique d'objets électroniques portatifs (OP) comportant un poste (P1) de chargement, une pluralité de postes de traitement, incluant au moins un poste (P3) de marquage au laser ou marquage au jet d'encre et/ou un poste (P4) d'inspection et/ou un poste (P5) de dépôt d'étiquettes, un poste (P6) de rejet et un poste (P2) de déchargement des objets personnalisés, **caractérisé en ce qu'**un dispositif de transfert (4) comporte au moins un composant mobile (OP), selon un cheminement en boucle fermée, chaque composant mobile (OP) étant entraîné en déplacement, selon le cheminement et solidaire d'une tête d'encodage (6) reliée à une carte de programmation (Si) entraînée en mouvement par le composant mobile, le cheminement amenant successivement la tête d'encodage (6) d'un poste (P1) de chargement à au moins un des postes de traitement de la pluralité de postes de traitement, en exécutant simultanément la personnalisation électronique du composant (OP) puis, soit à un poste (P2) de sortie, soit à un poste (P6) de rejet.

2. Machine selon la revendication 1, **caractérisé en ce qu'**elle comporte une unité de traitement assurant la commande des différents postes de la machine et la commande des moyens d'entrainement du dispositif de transfert.

3. Machine selon la revendication 1 ou 2 **caractérisée en ce que** la carte de programmation assure la personnalisation électronique du composant de l'objet portable même pendant le passage de l'objet portable devant un poste de traitement.

4. Machine selon une des revendications précédentes **caractérisée en ce que** le poste de traitement est un poste de contrôle et un contrôle considéré comme défectueux effectué par le poste déclenche le déroutement du programme de fonctionnement de la machine mis en oeuvre par l'unité de traitement vers un programme de traitement d'incident exécuté par l'unité de traitement, ce programme assurant la détection de la défectuosité d'une opération, l'interruption de la programmation électronique du composant, la commande du dispositif de transfert pour amener l'objet portable de la position dans laquelle une erreur est détectée à une position de rejet des rebuts tout en poursuivant la programmation des autres composants, puis l'amenée de la tête d'encodage rendue libre au poste de chargement pour charger un objet électronique portable à programmer, et concomitamment, le rechargement de la carte de programmation associée à la tête d'encodage nouvellement chargée avec les données prévues initialement pour l'objet portable rejeté, ainsi que le rechargement des données des postes situés entre la position de détection de défaut et le poste d'entrée puis reprise des opérations à chaque poste avec les données correspondantes à l'objet remplacé jusqu'à ce que la position où le défaut a été détecté soit atteinte.

5. Machine selon une des revendications précédentes **caractérisée en ce que** les moyens de contact de la tête d'encodage sont disposés de façon à laisser libre d'accès de toutes les autres zones de l'objet portable à l'exception des zones de contact dans le cas d'un objet portable à contact, pour permettre les opérations graphiques ou de personnalisation externe sur les objets pendant la personnalisation électrique.

6. Machine selon une des revendications précédentes **caractérisée en ce que** la mémoire du système informatique comprend pour chaque objet
- un Identifiant unique ;
- des Informations relatives aux données initiales (par exemple, nom du fichier de donnée, position de cet objet dans le fichier de données...) ;
- des données variables servant à la personnalisation (par exemple, les nom-prénom, date d'expiration, photo, code barre....);
- le statut de l'objet (objet valide, objet défectueux) et type d'erreur (par exemple, erreur lors de la programmation du chip, du laser, suite à un défaut mécanique).

7. Machine selon une des revendications précédentes **caractérisée en ce que** le logiciel de gestion de la machine gère le cycle normal de la machine et un cycle spécial de réfection d'un objet

8. Machine selon une des revendications précédentes **caractérisée en ce que** le logiciel associe en mémoire d'état courant du système informatique (8), la liste des objets à leurs positions physiques dans la machine

9. Machine selon une des revendications précédentes **caractérisée en ce que** lors d'un cycle spécial de réfection d'un objet, l'état de la machine, les identifiants et les états des objets sont sauvegardés dans une mémoire spécifique de défaut afin de repositionner la machine dans le même état qu'avant le début du cycle de réfection, la procédure du logiciel mise en oeuvre lors du cycle de réfection comprend :
- une rotation du transfert pour amener l'objet défectueux en face du poste de rejet et éjection de l'objet défectueux, les opérations de personnalisation électrique des autres objets continuant et les opérations prévues sur les autres postes de la machine étant arrêtées ;
- la commande de l'éjection de l'objet ;
- la commande du déplacement du transfert (4) pour apporter le poste libre devant le dépileur et chargement d'un nouvel objet;
- la sauvegarde de l'état machine dans une mémoire défaut dédiée ;
- la reprise d'un cycle complet afin de faire refaire toutes les opérations à la tête d'encodage associée au nouvel objet ayant remplacé l'objet défectueux ;
- la sauvegarde à chaque étape de l'état de la machine dans la mémoire d'état ;
- l'arrêt du cycle spécial de réfection une fois que l'état de la machine correspond pour les autres objets à l'état machine sauvegardé en mémoire dédiée avant le début du cycle de réfection, par comparaison des informations enregistrées dans la mémoire dédiée avec la mémoire de travail mémorisant les états de la machine à chaque étape ;
- la poursuite du processus par un cycle normal en transférant les objets aux postes suivants et en reprenant les opérations là où elles avaient été interrompues en chargeant dans les cartes de commandes de chaque postes les informations associées à l'objet présent dans le poste selon les informations de la mémoire d'état de la machine.

## Patentansprüche

1. Maschine für das elektrische und grafische Personalisieren von tragbaren elektronischen Objekten (OP), welche eine Ladeposition (P1), eine Mehrzahl von Bearbeitungspositionen, welche mindestens eine Laser-Markierungsposition (P3) oder eine Tintenstrahl-Markierungsposition (P3) und/oder eine Prüfposition (P4) und/oder eine Position (P5) zum Anbringen von Etiketten, eine Zurückweisungs-Position (P6) und eine Ausgabeposition (P2) personalisierter Objekte aufweist, **dadurch gekennzeichnet, dass** eine Übertragungsvorrichtung (4) mindestens eine bewegliche Komponente auf einer geschlossenen Bahn aufweist, wobei jede bewegliche Komponente gemäß der Bahn und gemeinsam mit einem mit einer Programmierkarte (Si) verbundenen und mittels der beweglichen Komponente zu einer Bewegung angetriebenen Codierkopf (6) zu einer Verlagerung angetrieben wird, wobei die Bahn den Codierkopf (6) aufeinanderfolgend (81) von einer Ladeposition (P1) zu mindestens einer der Bearbeitungspositionen von der Mehrzahl der Bearbeitungspositionen befördert, wobei gleichzeitig die elektronische Personalisierung der Komponente ausgeführt wird, und danach entweder zu einer Ausgabeposition (P2) oder zu einer Zurückweisungsposition (P6).

2. Maschine gemäß Anspruch 1, **dadurch gekennzeichnet, dass** sie eine Bearbeitungseinheit aufweist, welche die Steuerung der verschiedenen Positionen der Maschine und die Steuerung der Antriebsmittel der Übertragungsvorrichtung sicherstellt.

3. Maschine gemäß Anspruch 1 oder 2, **dadurch gekennzeichnet, dass** die Programmierkarte das elektronische Personalisieren der Komponente des tragbaren Objekts sogar während des Vorbeigehens des Objekts an einer Bearbeitungsposition sicherstellt.

4. Maschine gemäß einem der vorherigen Ansprüche, **dadurch gekennzeichnet, dass** die Bearbeitungsposition eine Prüfposition ist, und dass eine durch die Position bewirkte, als fehlerhaft beurteilte Prüfung die Funktionsprogrammänderung der Maschine auslöst, welche durch die Bearbeitungseinheit mittels eines Vorfalls-Bearbeitungsprogramms umgesetzt wird, welches durch die Bearbeitungseinheit ausgeführt wird, wobei dieses Programm die Erkennung der Fehlerhaftigkeit eines Vorgangs, das Unterbrechen der elektronischen Programmierung der Komponente, das Steuern der Übertragungsvorrichtung zum Befördern des tragbaren Objekts von der Position, in welcher ein Fehler erkannt wird, zu einer Zurückweisungsposition des Ausschusses sicherstellt, und alles während eines Weiterverfolgens der Programmierung der anderen Komponenten, dann die Zuführung des freigewordenen Codierkopfes auf die Ladeposition, um ein tragbares elektronisches programmierbares Objekt zu laden, und gleichzeitig das Wiederladen der Programmierkarte, welche einem neu mit den ursprünglichen für das zurückgewiesene tragbare Objekt vorgesehenen Werten geladenen Codierkopf zugeordnet ist, sowie das Wiederladen der Werte der Positionen, welche zwischen der Fehlererfassungsposition und der Eingangsposition angeordnet sind, und dann ein Wiederaufnehmen der Vorgänge an jeder Position mit den Werten, welche dem ersetzten Objekt entsprechen, bis die Position, an welcher der Fehler erfasst wurde, erreicht ist.

5. Maschine gemäß einem der vorherigen Ansprüche, **dadurch gekennzeichnet, dass** die Kontaktmittel des Codierkopfes auf eine Art angeordnet sind, welche Zugang zu allen anderen Zonen des tragbaren Objektes freilässt, mit Ausnahme von Kontaktzonen im Fall eines tragbaren Objekts zum Kontaktieren, um die graphischen Operationen oder die äußere Personalisierung auf den Objekten während der elektrischen Personalisierung zu ermöglichen.

6. Maschine gemäß einem der vorherigen Ansprüche, **dadurch gekennzeichnet, dass** der System-Informationsspeicher für jedes Objekt aufweist:
eine einzigartige Identifikation;
Informationen bezüglich Anfangswerten (beispielsweise Name der Datei des Werts, Position dieses Objekts in der Datei des Werts...);
variable Werte, welche der Personalisierung dienen (beispielsweise Name-Vorname, Ablaufdatum, Foto, Barcode...) ;
der Status des Objekts (gültiges Objekt, fehlerhaftes Objekt) und Fehlertyp (beispielsweise Fehler bei der Programmierung des Chips, des Lasers, infolge eines mechanischen Defekts).

7. Maschine gemäß einem der vorherigen Ansprüche, **dadurch gekennzeichnet, dass** die Verwaltungssoftware der Maschine den normalen Maschinenzyklus und einen Spezialzyklus einer Ausbesserung eines Objekts verwaltet.

8. Maschine gemäß einem der vorherigen Ansprüche, **dadurch gekennzeichnet, dass** die Software in den Speicher des gegenwärtigen Zustands des Betriebssystems (8) die Liste der Objekte an ihren physischen Positionen in der Maschine einträgt.

9. Maschine gemäß einem der vorherigen Ansprüche, **dadurch gekennzeichnet, dass** während eines Spezialzyklus einer Ausbesserung eines Objekts der Zustand der Maschine, die Kennungen und die Zustände des Objekts vor einem Repositionieren der Maschine in denselben Zustand wie vor dem Beginn des Ausbesserungszyklus in einem spezifischen Fehlerspeicher gesichert werden, wobei das Software-Verfahren, welches während des Ausbesserungszyklus ausgeführt wird, aufweist:
eine Drehung der Übertragung, um das fehlerhafte Objekt der Zurückweisungsposition zuzuwenden, und Auswerfen des fehlerhaften Objekts, wobei die elektrischen Personalisierungsvorgänge der anderen Objekte fortgeführt werden und die auf den anderen Positionen der Maschine vorgesehenen Vorgänge angehalten werden;
den Befehl des Auswerfens des Objekts;
den Befehl des Verlagerns der Übertragung (4) zum Heranführen der freien Position vor den Belader und Laden eines neuen Objekts;
das Sichern des Maschinenzustands in einem zugeordneten Fehlerspeicher;
das Wiederaufnehmen eines vollständigen Zyklus vor einem Ausführen eines Wiederausführens von allen Vorgängen am Codierkopf, welcher dem neuen Objekt, welches das fehlerhafte Objekt ersetzt hat, zugeordnet ist;
das Sichern des Zustands der Maschine im Zustandsspeicher bei jedem Schritt;
das Anhalten des Spezialzyklus der Ausbesserung, sobald der Maschinenzustand für die anderen Objekte dem im zugeordneten Speicher vor dem Beginn des
Ausbesserungszyklus gesicherten Maschinenzustand entspricht, mittels Vergleichens der im zugeordneten Speicher gesicherten Informationen mit dem Arbeitsspeicher, welcher die Zustände der Maschine bei jedem Schritt speichert;
das Fortsetzen des Verfahrens mittels eines normalen Zyklus, indem die Objekte an nachfolgende Positionen übertragen werden, und mittels Wiederaufnehmens der Vorgänge an der Stelle, wo sie unterbrochen worden waren,
indem in die Programmierkarten jeder Position die dem an der Position vorliegenden Objekt zugeordneten Informationen gemäß dem Zustandsspeicher der Maschine geladen werden.

## Claims

1. Machine for electrical and graphic customisation of portable electronic objects (OP) comprising a loading station (P1), a plurality of processing stations, including at least one laser jet or inkjet marking station (P5) and/or an inspection station (P4) and/or a label application station (P5), a rejection station (P6) and an unloading station (P2) for customised objects, **characterised in that** a transfer device (4) comprises at least one component (OP) which is mobile along a closed-loop path, each mobile component (OP) being moved along the path and connected to an encoding head (6) connected to a programming card (5i) moved along by the mobile component, the path successively leading the encoding head (6) from one loading station (P1) to at least one of the processing stations of the plurality of processing stations by simultaneously executing electronic customisation of the component (OP) then, either to an output station (P2) or to a rejection station (P6).

2. Machine as claimed in Claim 1, **characterised in that** it comprises a processing unit which ensures the control of the different stations of the machine and the control of the drive means of the transfer device.

3. Machine as claimed in Claim 1 or 2, **characterised in that** the programming card ensures the electronic customisation of the component of the portable object even during the passage of the portable object in front of a processing station.

4. Machine as claimed in any one of the preceding claims, **characterised in that** the processing station is a checking station and a control considered as defective carried out by the station triggers the diversion of the operation program of the machine implemented by the processing unit to an incident processing program executed by the processing unit, this program ensuring the detection of the defective condition of an operation, the interruption of the electronic programming of the component, the command of the transfer device to bring the portable object from the position in which an error is detected to a scrap rejection position whilst continuing the programming of other components, then bringing the encoding head, now free, to the loading station to load a portable electronic object to be programmed, and at the same time the reloading of the programming card connected to the encoding head freshly loaded with the data provided initially for the rejected portable object, as well as the reloading of the data from stations located between the defect detection position and the input station, then resumption of the operations at each station with the data corresponding to the object replaced until the position where the defect was detected is reached.

5. Machine as claimed in any one of the preceding claims, **characterised in that** the contact means of the encoding head are placed so as to give free access to all the other zones of the portable object with the exception of the contact zones in the case of a portable contact object, to allow graphic operations or external customisation on the objects during the electrical customisation.

6. Machine as claimed in any one of the preceding claims, **characterised in that** the memory of the computer system comprises for each object:
- a unique identifier;
- information relative to the initial data for example data file name, position of this object in the data file ...);
- variable data serving for the customisation (for example, full name, expiry date, photo, barcode ...);
- the status of the object (valid object, defective object) and type of error (for example, error during programming of the chip, of the laser, following a mechanical defect).

7. Machine as claimed in any one of the preceding claims, **characterised in that** the machine management software manages the normal cycle of the machine and a special reconstruction cycle of an object.

8. Machine as claimed in any one of the preceding claims, **characterised in that** the software associates in current status memory of the computer system the list of objects at their physical positions in the machine.

9. Machine as claimed in any one of the preceding claims, **characterised in that** during a special reconstruction cycle of an object, the status of the machine, the identifiers and the statuses of the objects are saved in a specific default memory to reposition the machine in the same status as before the start of the reconstruction cycle, the procedure of the software being configured to run during the reconstruction cycle comprises:
- rotation of the transfer to bring the defective object opposite the rejection station and ejection of the defective object, with the electrical customisation operations of other objects continuing and the operations provided on the other stations of the machine being stopped;
- the object ejection command;
- the displacement command of the transfer to bring the free station in front of the unstacker and loading a new object:
- saving the machine status in a dedicated default memory;
- the resumption of a complete cycle to have all operations redone at the encoding head associated with the fresh object having replaced the defective object;
- at each step saving of the status of the machine in the status memory, stopping the special reconstruction cycle once the status of the machine corresponds for the other objects to the machine status saved in dedicated memory prior to the start of the reconstruction cycle, by comparison of the information recorded in the dedicated memory with the working memory storing the statuses of the machine at each step;
- continuing the process by a normal cycle by transferring the objects to the following stations and by resuming the operations where they had been discontinued by loading in the control cards of each station the information associated with the object present in the station according to the information of the status memory of the machine.
